# EUROPEAN PATENT APPLICATION

(11) **EP 4 410 527 A1**
(43) Date of publication of application: **07.08.2024**
(21) Application number: 23154349.7
(22) Date of filing: 31.01.2023
(51) Int. Cl.: B29C 70/44, B29B 11/06, B29C 70/54, B29C 51/10

(54) **METHOD OF AND ASSEMBLY FOR PRODUCING A FIBRE PREFORM OR MANUFACTURING A COMPOSITE COMPONENT**

(71) Applicant: Airbus Operations GmbH, 21129 Hamburg (DE)
(72) Inventor: Kleinpeter, Roman, 21129 Hamburg (DE); Häberle, Anja, 21129 Hamburg (DE); Teich, Benjamin, 21129 Hamburg (DE); Yildiz, Ali, 21129 Hamburg (DE); Küther, Thomas, 21129 Hamburg (DE); Stolz, Johannes, 21129 Hamburg (DE)

(57) **Abstract**

Disclosed is a method which may serve to producing a fibre preform for a fibre reinforced composite component and/or to manufacturing the fibre reinforced composite component. The method comprises pressing an evacuable envelope 20 enclosing a fibre preform material F against a forming tool 10, the pressing being accomplished by evacuating an evacuable bag 35 containing the evacuable envelope 20 with the fibre preform material F. The method further comprises heating the forming tool 10 and/or the preform F, evacuating the envelope 20, and unsealing the bag 35 while maintaining the envelope 20 evacuated. Due to the maintained evacuated state, a clamping force acts on the fibre preform material which force serves to compensate different shrinkage of the forming tool and the fibre preform material when both cool down. It allows removing the evacuable envelope 20 with the fibre preform material at any temperature after forming.

Further disclosed is an assembly 1 which may serve to carry out said method.

## Description

The present invention concerns a method of and an assembly which may serve to producing a fibre preform for a fibre reinforced composite component and/or to manufacturing a fibre reinforced composite component.

Fibre reinforced composite components are employed and appreciated for numerous applications. In particular, they provide benefits in the field of lightweight construction of structures such as vehicles, in particular aircrafts, sports equipment or wind turbines, for instance.

To fabricate such components, a fibrous preform is bonded with a matrix material. In particular, such preform may be a pre-preg made of fibres which are pre-impregnated by the matrix, which pre-preg may be moulded into a desired shape and heated under pressure for curing. According to other procedures, the fibrous preform may be a dry fibre preform, i.e., made of a dry fibre material held together by a binder material, which dry fibre preform may be moulded in the desired shape before being impregnated by the matrix.

In document EP 2 754 548 A1, a method for producing preforms for fibre reinforced composites is disclosed. According to this teaching, to built-up a three-dimensional laminar preform, layers of dry fibres are laid, between a first and a second thermoplastic or thermoset resin or foil layer, on a three-dimensional workpiece carrier. An air-tight packing of the fibres between the first and the second layer is produced and evacuated to stabilise the preform. The thus packed preform with its fibres and the first and second thermoplastic or thermoset resin or foil layers forms a unit which can be easily transported, stored and - in due course - cured in a hot-pressing device.

It is an object of the present invention to provide a simplified alternative technique improving a manufacture of a fibre reinforced composite component.

The object is achieved by a method according to claim 1 and by an assembly according to claim 11. Advantageous embodiments are disclosed in the dependent claims, the description and the figures.

A method according to the present invention comprises pressing an evacuable envelope enclosing a fibre preform material against a forming tool. The pressing is effected by evacuating an evacuable bag which contains the evacuable envelope with the fibre preform material enclosed therein.

The fibre preform material is configured to be used for manufacturing a fibre reinforced composite component. It may be a dry fibre preform material (i.e., a material comprising a structure of dry fibres and a binder holding them together) or a pre-preg (comprising fibres which are pre-impregnated by a matrix). It may comprise woven or non-woven fibres; in particular, it may include a mat of fibres, a fleece, a fabric, or a fibre stack such as a laminate of layers formed by various strands or portions of a common filament running in parallel. When the pressing is started, the fibre preform material may have a flat shape, from which it may preferably deviate during and due to the ongoing pressing.

The method according to the present invention further comprises heating the forming tool and/or the fibre preform material, evacuating the evacuable envelope, and (thereafter) unsealing the bag (i.e., allowing air to flow to the envelope), while (contemporaneously) maintaining the envelope evacuated; the unsealing may comprise eliminating the bag's structure of forming a receptacle.

According to advantageous embodiments, the method may further comprise unsealing the evacuated envelope. If a dry fibre preform material is used as the fibre preform material, the thus produced fibre preform may be taken out of the envelope. The method may further comprise impregnating the fibre preform with a matrix.

Alternatively, as mentioned above, the fibre preform material may be a pre-preg. In this case, the method may serve to moulding the pre-preg so as to be a fibre preform. Additionally or alternatively, when the fibre preform material is a pre-preg, said heating may comprise heating the fibre preform material to a curing temperature of the pre-preg, preferably for a designated curing time. In this case, the method may thus comprise curing the pre-preg and, thereby, manufacturing a fibre reinforced composite component. Advantageously, such method further comprises tempering the cured pre-preg. Such embodiments in particular advantageously simplify the production of the fibre reinforced composite component, making curing tools dispensable.

Accordingly, the method according to the present invention in particular may serve to producing a fibre preform having a predetermined shape for being used (possibly later on) in manufacturing a fibre reinforced composite component. Additionally or alternatively, the method may serve to manufacturing a fibre reinforced composite component.

The fibre reinforced component may in particular be a stiffener (in particular a stiffener designated for use in an aerospace application), for instance, in particular be a stringer such as a T-shaped stringer.

Said pressing may preferably comprise pressing the evacuable envelope against an uneven surface the forming tool may preferably have, e.g., against a corner, against an edge and/or against a bulge of the forming tool. By way of said pressing, the fibre preform material enclosed in the evacuable envelope is forced to at least partially abutting on the forming tool, whereby the fibre preform material is moulded. Indeed, the pressing preferably causes the fibre preform material to deform so as to have a three-dimensional structure which may comprise one or more inflection/s, curvature/s and/or corner/s. In particular, the forming tool provides a negative of a shape the fibre preform material is intended to be given in at least a portion thereof.

In particular, the present invention thus employs two evacuable receptacles, namely the evacuable envelope and the evacuable bag. As is to be understood, the attribute "evacuable" refers to the bag being made of an air-tight material and being in an unevacuated state, i.e., containing air available for being extracted from the bag, such as by a vacuum pump or by a device configured to squeeze the bag. The same holds analogously for the envelope. Preferably, the bag and/or the envelope are/is at least partially made of a flexible material such as a membrane. Such (flexible) membrane may at least partially be made of a plastic foil or a metal foil, for example.

Accordingly, when the envelop or bag is being evacuated, respectively, air is being extracted therefrom, whereby a volume respectively enclosed by the envelope or bag is reduced; in particular, after the evacuating, the evacuated envelope or bag, respectively, is technically void of air (i.e., as feasible). The extracting may be effected by squeezing the respective receptacle (envelope or bag) and/or by connecting it to a vacuum pump.

The evacuating of the envelope may be effected by opening a sealing of the envelope while this is being pressed against the forming tool, such that air is forced out of the envelope due to the bag being evacuated. After its evacuation, the envelope may preferably be sealed again.

In particular, the evacuating of the envelope may form part of vacuum-packing the fibre preform material in the envelope. Additionally or alternatively, said evacuating of the bag may form part of vacuum-packing the envelope within the bag.

According to advantageous embodiments of the present invention, the evacuable bag is built by at least a portion of the forming tool and a flexible membrane which covers said portion and is sealed with said portion and/or with a base the forming tool may be positioned on. For example, the flexible membrane may be sticked to said portion and/or base by an air-tight glue line.

In such embodiments, unsealing the bag may comprise at least partially detaching the membrane from the forming tool and/or the base (which may eliminate the bag's structure forming a receptacle).

According to alternative embodiments, the evacuable bag may be a receptacle containing not only the evacuable envelope with the fibre preform material, but also at least a portion of the forming tool. Such evacuable bag preferably is at least partially made of a flexible membrane.

By said heating the forming tool, also the fibre preform material within the envelope pressed against the forming tool is heated. The heating allows a movement of the fibres contained in the fibre preform material relative to each other. In particular, by the heating, the fibre preform material may preferably be warmed up to at least a melting temperature of a binder or matrix the fibre preform material may respectively contain as mentioned above. A cohesion of the fibres may thus be reduced or even eliminated. Accordingly, and as the air contained in the evacuable envelope buffers the pressure exerted thereon, a formation of the fibres in the fibre preform material changes. Due to such change, the fibre preform material evenly further adjusts to the shape of the forming tool.

When the envelope then is evacuated, the fibre preform material is compressed in its thus created form (and fibre formation). That is, a clamping (compacting) force is applied to the fibre preform material, which force inhibits or at least reduces the movability of the fibres within the fibre preform material's structure. Thereby, a subsequent (further) deformation of the fibre preform material is suppressed even when the pressing against the forming tool is released by unsealing the bag.

The releasing of said pressing, however, diminishs or even ceases the dependency of the fibre preform material's shape from the forming tool. Accordingly, when the heating is stopped and the forming tool cools down, the shape of the fibre preform material within the evacuated envelope is maintained even if its correspondence to the shape of the forming tool subsides due to different shrinkages resulting from different thermal expansion properties of the respective materials.

As a consequence, the unfavourable occurrence of undulations on a produced fibre preform and/or on a manufactured composite component can be reduced, whereby a quality of the preform and/or composite component is improved. Also, more complex geometries and meeting of tighter tolerances are facilitated by the method according to the present invention.

Moreover, consideration of the respective thermal expansion properties of the materials of the forming tool with regard to the fibre preform material becomes less critical when choosing the forming tool for producing the fibre preform. In particular, a forming tool made of a material having other advantages (such as with regard to its accessibility and/or with respect to a manufacture and/or durability of the forming tool manufactured therefrom) can be used for producing the fibre preform and/or for manufacturing the composite component. Analogously, a flexibility in the selection of the fibre preform material is improved, especially with respect to binder and/or matrix materials contained therein.

Moreover, as the envelope encloses the fibre preform material, it runs around the fibre preform material, such that a portion of the envelope is arranged, during the pressing, between the fibre preform material and the forming tool. Accordingly, the envelope separates the fibre preform material from the forming tool during said pressure and thus inhibits direct contact of the fibre preform material with the forming tool. As a consequence, a cleaning of the forming tool after the production of the fibre preform and/or manufacture of the composite component becomes dispensable.

As is to be understood, some or all of the acts comprised by said method, in particular the acts of pressing, heating, evacuating the evacuable envelope, and unsealing the bag may be started and/or stopped successively or contemporaneously, and/or their execution may at least partially overlap. In particular, the envelope is preferably evacuated while (still) being pressed against the forming tool, in particular while the bag is in an evacuated state. Additionally or alternatively, the heating is preferably processed (started and/or continued) while the evacuable envelope containing the fibre preform material is being pressed against the forming tool, thus, when the bag is in an evacuated state, and/or the heating is stopped or at least reduced before the bag is unsealed.

The method according to the present invention may comprise inserting the fibre preform material into the envelope. The inserting in this case may preferably be done before joining the evacuable envelope to the forming tool, i.e., when the envelope is still separate from the forming tool. This allows a particularly convenient provision of the envelope enclosing the fibre preform material.

According to advantageous embodiments, the method comprises letting the forming tool cool down, e.g., to a temperature ambient to the forming tool, and/or to a temperature of at most 80°C or at most 60°C. In particular, the method may preferably comprise stopping the heating of the forming tool and/or of the fibre preform material. Such embodiments may further comprise (actively) cooling the forming tool and/or the fibre preform material by a cooling means such as a fan, a fluid system and/or a thermal pack.

Additionally or alternatively, the method according to the present invention may comprise letting the forming tool and/or the fibre preform material cool down, and unsealing the evacuated envelope after the fibre preform material has reached a temperature exceeding an ambient temperature by at most 80°C or at most 60°C or at most 40°C or at most 20°C, and/or after the fibre preform material has reached a temperature of at most 100°C or at most 80°C or at most 60°C. Accordingly, the envelope is not unsealed and the produced fibre preform or the manufactured composite component, respectively, is not taken off the envelope before it has cooled down at least to said (respective) temperature. Thereby an undesired supplementary deformation can be prevented.

Additionally or alternatively, the method according to the present invention may comprise taking the (still) evacuated envelope off the forming tool when a temperature of the forming tool exceeds an ambient temperature thereof by at least 25°C or at least 50°C or even at least 80°C. The fibre preform material within the envelope may thus cool down separate from the forming tool. Thereby, a faster process time may be effected, and/or a cooling down or at least a complete cooling down of the forming tool may be avoided, such that a further fibre preform may be produced, using the still heated forming tool and thus with less consumption of energy.

Preferably, the ambient temperature (i.e., the temperature ambient to the forming tool) is at most 60°C. Additionally or alternatively, it may be at least 20°C, at least 40°C, or at least 50°C.

An assembly according to the present invention comprises an envelope which is made of an air-tight material and adapted to receive a fibre preform material, preferably along with extractable (excess) air, so as to be evacuable. In particular, the envelope is preferably adapted to be evacuable when enclosing the fibre preform material. Advantageously, the envelope is further adapted to be sealed.

Moreover, the assembly comprises a forming tool configured to giving the fibre preform material a predetermined shape. Therein, the forming tool is heatable. For example, it may comprise at least one heating element such as one or more resistance wire/s, and/or it may be configured to be connected to a heater for adopting heat therefrom, such as by comprising a lead system for channelling a fluid heated be the heater.

The assembly further comprises a bag component. Such bag component may be adapted to contribute to forming an evacuable bag adapted to accommodate the envelope with the fibre preform (and - possibly - extractable air) contained therein. For instance, such bag component may comprise an air-tight membrane adapted to be sealed to the forming tool and/or - if applicable - to a base the forming tool may be positioned on, thereby forming said evacuable bag in conjunction with the forming tool and/or the base. Alternatively, said bag component may itself form an evacuable bag adapted to contain the envelope with the fibre preform (and - possibly - extractable air) contained therein. In such case, the evacuable bag is preferably further adapted to contain at least a portion of the forming tool. In both cases, the evacuable bag formed by the bag component (alone or in conjunction with the forming tool and/or the base) then is adapted to effect that the envelope enclosing the fibre preform material is pressed against the forming tool when the evacuable bag is evacuated.

A means for evacuating said evacuable bag is further comprised by the assembly according to the present invention, which means may comprise a vacuum pump and/or a pressurising device and/or at least one valve.

In particular, the assembly according to the present invention is preferably adapted to be used for carrying out a method according to an embodiment of the present invention. It may serve for producing a fibre preform to be used (possibly later on) in manufacturing a fibre reinforced composite component, and/or for manufacturing a fibre reinforced composite component. Reversely, the method according to the present invention is preferably carried out by an assembly according to an embodiment of the present invention.

According to advantageous embodiments, the forming tool is at least partially made of one or more metal/s. It may comprise at least one separating film and/or a coating which during the pressing is arranged between a mould portion of the forming tool and the evacuable envelope.

In what follows, preferred embodiments of the present invention are explained with respect to the accompanying drawings. As is to be understood, the various elements, components and geometrical structures are depicted as examples only, may be facultative and/or combined on a manner different than depicted. Reference signs for related elements are used comprehensively and not defined again for each figure.

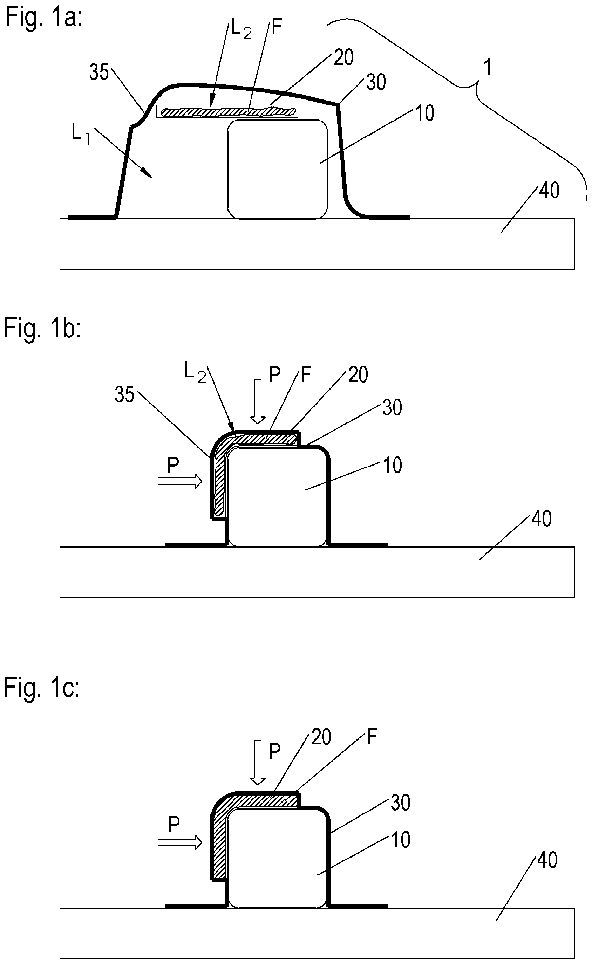

Shown is schematically in
- Fig. 1a -1d:: an assembly according to an exemplary embodiment of the present invention while carrying out an exemplary method according to the present invention.

Figures 1a -1d illustrate, by a sectional view, the processing of a method according to an embodiment of the present invention with an assembly 1 according to an exemplary embodiment of the present invention. The assembly 1 comprises a base 40, a heatable forming tool 10 positioned on the base 40, and an envelope 20 made of an air-tight material, which in the situation depicted in Figure 1a encloses not only a fibre preform material F, but also air L₂ which is available for extraction from the envelope 20. In particular, in the state shown in Figure 1a, the envelope 20 is thus evacuable. The fibre preform material F may be a pre-preg or a dry fibre preform material whose dry fibres are kept together by a binder.

The assembly 1 further comprises a bag component 30 which in the present case is configured as a flexible membrane made of an air-tight material. As can be seen in Figure 1a, the bag component 30 is configured to contribute to forming an evacuable bag 35 adapted to accommodate the evacuable envelope 20 with the fibre preform F contained therein: Indeed, in said figure, the flexible membrane 30 is seen to be sealed to the basis 40. Thereby, the bag component 30 forms, in conjunction with the forming tool 10 and the base 40, the bag 35 accommodating the evacuable envelope 20 with the fibre preform material F contained therein.

In the situation illustrated in Figure 1a, the bag 35 further contains air L₁ which is available for extraction, whence in said state, the bag 30 is evacuable.

Figure 1b illustrates a state in which said the air L₁ has been extracted from the bag 35 using means such as a vacuum pump (not shown in the figures) further comprised by the assembly. The bag 35 is thus evacuated, whereby the evacuable envelope 20 with the fibre preform material F contained therein is pressed, with a pressure P, against the forming tool 10. In the exemplary case shown, the evacuable envelope and, therewith, the fibre preform material F enclosed therein in particular is pressed against an uneven surface of the forming tool 10 forming an edge.

Due to the pressing, the fibre preform material F enclosed in the evacuable envelope 20 is forced to adopt the shape of the forming tool 10. The forming tool 10 and, therewith, the fibre preform material F enclosed in the envelope 20 is heated to a melting temperature of a binder or of a matrix contained in the fibre preform material F (being a dry fibre preform material or a pre-preg as mentioned above). Thereby, a cohesion of the fibres contained in the fibre preform material F is reduced. As a consequence, a (not shown) formation of the fibres in the fibre preform material F changes, whereby the fibre preform material F adjusts even further to the formable tool 10.

The air L₂ is then extracted from the envelope 20 which thus is evacuated, as depicted in Figure 1c. Thereby, a clamping (compacting) force is applied to the fibre preform material F enclosed by the envelope 20.

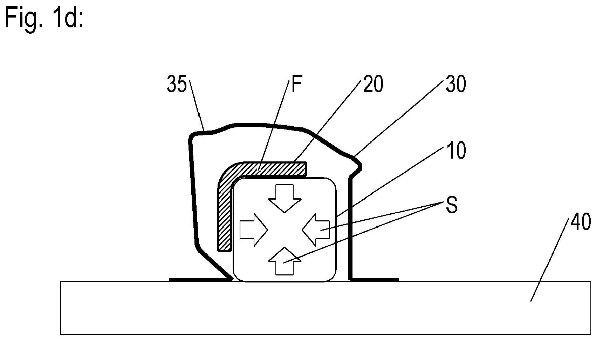

When the bag 35 is thereafter unsealed, i.e., when air is allowed to enter the bag 35 as illustrated in Figure 1d, the envelope 20 is maintained evacuated, such that said clamping/compaction is continued. Accordingly, a movement of the fibres within the fibre preform material's structure is inhibited or at least reduced. When the heating is stopped and the forming tool 10 as well as the fibre preform material F cool down, the shape of the fibre preform material F is thus maintained due to the ongoing application of the clamping force, even if a shrinkage S of the forming tool 10 occurs which due to unequal thermal expansion properties is different from a shrinkage of the fibre preform material. As a consequence, unfavourable deformations of the fibre preform material F such as undulations are obviated. In particular, the necessity of choosing materials for forming tool 10 and of the fibre preform material F which harmonise with regard to their thermal extension properties is relaxed such that materials having advantages with respect to other criteria (such as regarding the manufacture or availability) can be used while nevertheless fibre reinforced composite components of high quality can be produced.

Disclosed is a method which may serve to producing a fibre preform for a fibre reinforced composite component and/or to manufacturing the fibre reinforced composite component. The method comprises pressing an evacuable envelope 20 enclosing a fibre preform material F against a forming tool 10, the pressing being accomplished by evacuating an evacuable bag 35 containing the evacuable envelope 20 with the fibre preform material F. The method further comprises heating the forming tool 10 and/or the fibre preform material F, evacuating the envelope 20, and unsealing the bag 35 while maintaining the envelope 20 evacuated. Due to the maintained evacuated state, a clamping force acts on the fibre preform material which force serves to compensate different shrinkage of the forming tool and the fibre preform material when both cool down. It allows removing the evacuable envelope 20 with the fibre preform material at any temperature after forming.

Further disclosed is an assembly 1 which may serve to carry out said method.

### References

- 1: assembly

- 10: forming tool
- 20: envelope
- 30: bag component / membrane
- 35: bag
- 40: base

- F: fibre preform material
- L₁: air in bag
- L₂: air in envelope
- P: pressure force
- S: shrinkage

## Claims

**1.** Method comprising:
- pressing an evacuable envelope (20) enclosing a fibre preform material (F) against a forming tool (10), the pressing being accomplished by evacuating an evacuable bag (35) containing the evacuable envelope (20) with the fibre preform material (F);
- heating the forming tool (10) and/or the preform (F);
- evacuating the envelope (20); and
- unsealing the bag (35) while maintaining the envelope (20) evacuated.

**2.** Method according to claim 1, further comprising inserting the fibre preform material (F) into the envelope (20).

**3.** Method according to one of claims 1 or 2, wherein the evacuable bag (35) is formed by a membrane (30) in conjunction with the forming tool (10) and/or with a base (40) the forming tool (10) is positioned on.

**4.** Method according to one of claims 1 or 2, wherein the evacuable bag (35) is a receptacle containing, further to the envelope (20) with the fibre preform (F), at least a portion of the forming tool (10).

**5.** Method according to one of the preceding claims, further letting the fibre preform material (F) cool down, and unsealing the evacuated envelope (20) after the fibre preform material (F) has reached a temperature exceeding an ambient temperature by at most 80°C, at mot 60°C, at most 40°C or at most 20°C.

**6.** Method according to one of the preceding claims, further comprising taking the evacuated envelope (20) off the forming tool (10) when a temperature of the forming tool (10) exceeds an ambient temperature by at least 25°C, at least 50°C or at least 80°C.

**7.** Method according to one of the preceding claims, wherein the fibre preform material (F) is a dry fibre preform material or a pre-preg.

**8.** Method according to one of claims 1 to 6, wherein the fibre preform material (F) is a dry fibre preform material, and the method further comprises impregnating the fibre preform produced therefrom with a matrix.

**9.** Method according to one of claims 1 to 6, wherein the fibre preform material (F) is a pre-preg, and heating the forming tool (10) comprises heating the fibre preform to a curing temperature of the pre-preg.

**11.** Assembly (1) comprising
- an envelope (20) made of an air-tight material and adapted to receive a fibre preform material (F),
- a heatable forming tool (10) for giving the fibre preform material (F) a predetermined shape,
- bag component (30) forming or configured to contribute to forming an evacuable bag (35) adapted to accommodate the envelope (20) enclosing the fibre preform material (F); and
- means for evacuating the evacuable bag (35).
